# EUROPÄISCHE PATENTSCHRIFT

(11) **EP 2 105 326 B1**
(45) Veröffentlichungstag und Bekanntmachung des Hinweises auf die Patenterteilung: **21.04.2010**
(21) Anmeldenummer: 08006126.0
(22) Anmeldetag: 28.03.2008
(51) Int. Cl.: B60D 5/00, B61D 17/22, B62D 47/02

(54) **Übergang zwischen zwei gelenkig miteinander verbundenen Fahrzeugen, wobei der Übergang einen Übergangsbalg aufweist**
Joint between two vehicles connected via a jointed connection, where the connection is a connection corridor
Passage entre deux véhicules reliés de manière articulée, le passage comprenant une poutre de passage

(43) Veröffentlichungstag der Anmeldung: 30.09.2009
(73) Patentinhaber: Hübner GmbH, 34123 Kassel (DE)
(72) Erfinder: Goebels, Andre, 34134 Kassel (DE); Hetterscheidt, Bernd, 34130 Kassel (DE)
(74) Vertreter: Walther, Walther & Hinz GbR

(56) Entgegenhaltungen:
- EP-A- 0 522 671
- EP-A- 0 650 743
- EP-A- 1 249 255
- DE-A1-102004 043 193
- GB-A- 2 215 204

## Beschreibung

Die vorliegende Erfindung betrifft einen Übergang zwischen zwei gelenkig miteinander verbundenen Fahrzeugen, wobei der Übergang einen Übergangsbalg aufweist.

Übergänge der eingangs genannten Art sind aus dem Stand der Technik hinreichend bekannt. Diese Übergänge verbinden zwei Fahrzeugteile miteinander, um den Personen das Hinüberwechseln von eines Fahrzeugteil in das andere Fahrzeugteil zu ermöglichen. Insofern sind beispielsweise Gelenkbusse oder auch Schienenfahrzeuge bekannt, bei denen die einzelnen Wagons durch solche Übergänge verbunden sind. Ein Übergang umfasst im Einzelnen zumindest eine Übergangsbrücke und einen die Übergangsbrücke überspannenden Balg, beispielsweise in Form eines Wellen- oder Faltenbalges. Der Balg hat im Querschnitt die Form eines Rechteckes, und stellt demzufolge ein tunnelartiges Gebilde dar. Der Balg selbst als Teil des Übergangs kann zweilagig ausgebildet sein, wobei er einen Innen- und einen Außenbalg umfasst. Bekannt ist außerdem sowohl eine Innenwandverkleidung des Balges, um u. a. den Balg vor Wandalismus zu schützen, und auch eine Deckenverkleidung, die dazu dient, im Bereich der Decke geführte Versorgungsleitungen abzudecken. In jedem Fall besteht der Balg aus einem Kunststoffmaterial. Insbesondere im Schienenbereich werden an das Material des Balges sehr hohe Anforderungen hinsichtlich des Brandschutzes gestellt.

Um die Brandschutzbestimmungen, die an einen Balg bzw. an einen Übergang insgesamt gestellt werden, zu erfüllen, sind aus dem Stand der Technik, die unterschiedlichsten Maßnahmen bekannt. So ist aus der gattungsbildenden DE 10 2004 043 193 A1 bekannt, das Balgmaterial selbst derart auszugestalten, dass es feuerhemmend ist. Im Einzelnen ist hierbei vorgesehen, dass das Material für den Balg eine Gitterstruktur derart ausbildet, dass die bei der Verbrennung entstehenden Gase in Richtung der Zone höchster Wärme abgeführt werden.

Aus der EP 1 782 074 A1 (06013701.5) ist ein Übergang zwischen zwei gelenkig miteinander verbundenen Fahrzeugen mit einem Übergangsboden, insbesondere in Form einer Gliederbrücke bei einem schienengebundenen Gelenkfahrzeug oder einer Plattform bei einem Gelenkbus bekannt, wobei der Boden oder Teile des Bodens mit einem Flammschutzmittel versehen sind. Durch die Anordnung eines Flammschutzmittels im Boden des Übergangs soll erreicht werden, dass bei einer auf der Unterseite des Bodens befindlichen Wärmequelle eine vorbestimmbare Temperatur auf der Oberseite des Bodens nicht überschritten wird.

Aus der EP 07009202.8 ist ein doppelwandig ausgebildeter Balg bekannt, wobei durch die Doppelwandigkeit des Balges ein Hohlraum gebildet wird, in dem intumeszierendes, feuerhemmendes Material untergebracht ist.

Die aus dem Stand der Technik bekannten Maßnahmen sind allesamt relativ aufwändig, und zwar nicht nur konstruktiv, sondern auch finanziell aufwändig, weshalb weiterhin ein Interesse daran besteht zu verhindern, dass bei Ausbruch eines Feuers im Bereich des Übergangs Menschen zu Schaden kommen.

Um Personenschäden zu vermeiden, ist insofern erfindungsgemäß vorgesehen, dass der Übergang eine Feuerlöscheinrichtung aufweist. Eine solche Feuerlöscheinrichtung zeichnet sich dadurch aus, dass beispielsweise durch einen Sensor, z. B. einen Rauchmelder, ein Alarm ausgelöst wird, der bewirkt, dass im Bereich des Übergangs ein Löschmittel abgesondert wird. Ein solches Löschmittel kann im einfachsten Fall Wasser oder auch entsprechende Chemikalien umfassen bzw. eine Kombination aus Chemikalien und Wasser darstellen. Schlussendlich ist die Wahl des Löschmittels abhängig von dem Material des Brandherdes.

Vorteilhafte Merkmale und Ausgestaltungen ergeben sich aus den Unteransprüchen.

So ist insbesondere vorgesehen, dass die Feuerlöscheinrichtung an der Innenseite des Übergangs angeordnet ist. Hieraus wird deutlich, dass der Brandherd von innen gelöscht wird. Dies ist insofern von Vorteil, als die Anbringung der Feuerlöscheinrichtung außen auf dem Balg die Gefahr in sich birgt, dass die Feuerlöscheinrichtung aufgrund von Witterungseinflüssen, z. B. Verschmutzung oder Vereisung, nicht funktionsfähig ist.

Im Einzelnen ist des Weiteren vorgesehen, dass die Löscheinrichtung mindestens eine an der Innenseite des Übergangs angeordnete Düse zur Verteilung eines Löschmittels aufweist. Hierbei ist insbesondere vorgesehen, dass durch die mindestens eine Düse ein Wasser- oder Chemikalien nebel versprüht wird, wobei darauf hinzuweisen ist, dass das Versprühen eines Nebels den Vorteil hat, dass ein solcher Nebel vom Brandherd angezogen wird, und daher durch den Nebel auch ansonsten unzugängliche Stellen gelöscht werden können. In diesem Zusammenhang ist insbesondere vorgesehen, dass die Düse zum Versprühen des Löschmittels Düsenöffnungen aufweist, die sowohl auf die Balgdecke zugerichtet sind als auch auf die Balgseitenwände und auch auf den Übergangsboden. Hierdurch soll sichergestellt werden, dass sich der Nebel, beispielsweise ein Wassernebel, gleichmäßig im Inneren des Übergangs verteilt.

Wie bereits an anderer Stelle erläutert, umfasst die Löscheinrichtung einen Sensor zur Ermittlung des Brandherdes bzw. des Feuers. Solche Sensoren sind aus dem Stand der Technik hinreichend bekannt, beispielsweise als Rauchmelder. Zur Aufnahme der Löschflüssigkeit dient ein Behälter, der unmittelbar im Bereich des Übergangs oder am Übergang selbst angeordnet ist. Hierbei kann vorgesehen sein, den Behälter zur Aufnahme des Löschmittels unter der Übergangsbrücke, unter der Bodenabdeckung, über der Zwischendecke oder zwischen Innen- und Außenbalg anzuordnen, je nachdem wo Platz ist. Der Behälter selbst ist vorteilhaft druckfest ausgebildet, um durch das unter Druck stehende Löschmittel die Erzeugung eines Nebels durch die Düsen zu ermöglichen. Die Verbindung zwischen der mindestens einen Düse und dem Löschmittelbehälter erfolgt durch eine Leitung; diese kann am Balg entlang geführt werden. In diesem Zusammenhang ist auf Folgendes hinzuweisen:

Aus dem Stand der Technik sind sogenannte zweiteilige Bälge bekannt, bei der die beiden Balgteile mittig durch einen sogenannten Kuppelrahmen miteinander verbunden sind. Darüber hinaus besitzen die Bälge zur Stabilisierung sogenannte Balgrahmen, die die Falten oder Wellen umlaufend erfassen. Nach einer Variante ist nun vorgesehen, an den Balgrahmen oder auch den Mittelrahmen die Leitung zur Versorgung der Düse mit Löschmittel zu verlegen. Vorteilhaft ist in diesem Zusammenhang, wenn die Düse beispielsweise mittig im Balg, beispielsweise am Mittelrahmen, angeordnet ist. Denkbar ist allerdings auch die Anordnung derartiger Düsen im Seitenwandbereich. Die Anzahl der Düsen ist hierbei abhängig von der Größe des Übergangs.

Wie bereits ausgeführt, ist nach einer Variante vorgesehen, die Leitung zum Transport des Löschmittels am Mittelrahmen oder Balgrahmen zu befestigen. Nach einer zweiten Variante ist allerdings auch denkbar, den Mittelrahmen und/oder den Balgrahmen hohl auszubilden, und den Balgrahmen unmittelbar als Transportmittel für das Löschmittel auszubilden.

Wie bereits ausgeführt, kann die mindestens eine Düse an den unterschiedlichsten Stellen im Bereich des Übergangs, vorzugsweise auf der Innenseite des Übergangs, angeordnet sein. Denkbar ist in diesem Zusammenhang, die Düse an einem Rahmen, beispielsweise an dem Mittelrahmen oder an dem Balgrahmen, zu befestigen. Denkbar ist allerdings auch die Anordnung der Düse an der Innenverkleidung des Balges.

Anhand der Zeichnungen wird die Erfindung nachstehend beispielhaft näher erläutert.

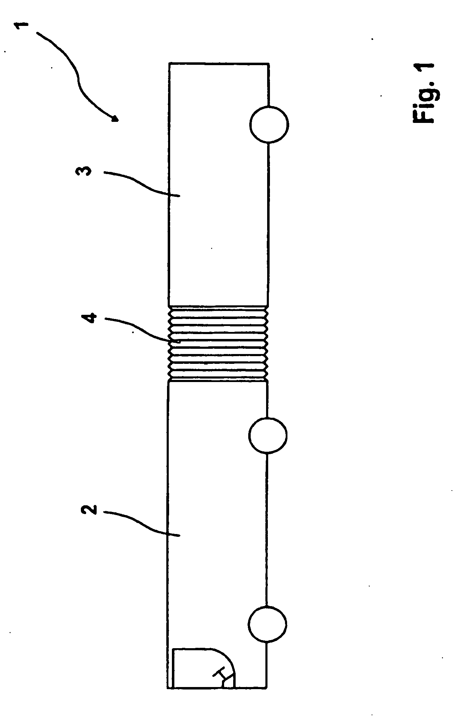

- Figur 1: zeigt ein Gelenkfahrzeug mit einem Übergang als schematische Darstellung;
- Figur 2: zeigt den Übergang gemäß Figur 1 als Ausschnitt in einer vergrößerten Darstellung;
- Figur 3: zeigt die beiden Kuppelrahmen gemäß der Einzelheit III aus Figur 3 in vergrößerter Darstellung;
- Figur 4: zeigt schematisch einen Ausschnitt eines Wellenbalges mit einem Balgrahmen, der einen Hohlraum zur Führung des Löschmittels aufweist;
- Figur 5: zeigt schematisch einen Wellenbalg in den Ausschnitten 5a, 5b und 5c, wobei der Balgrahmen jeweils eine Düse (Figur 5a), eine Leitung für das Löschmittel (Figur 5b) und einen Sensor (Figur 5c) aufweist.

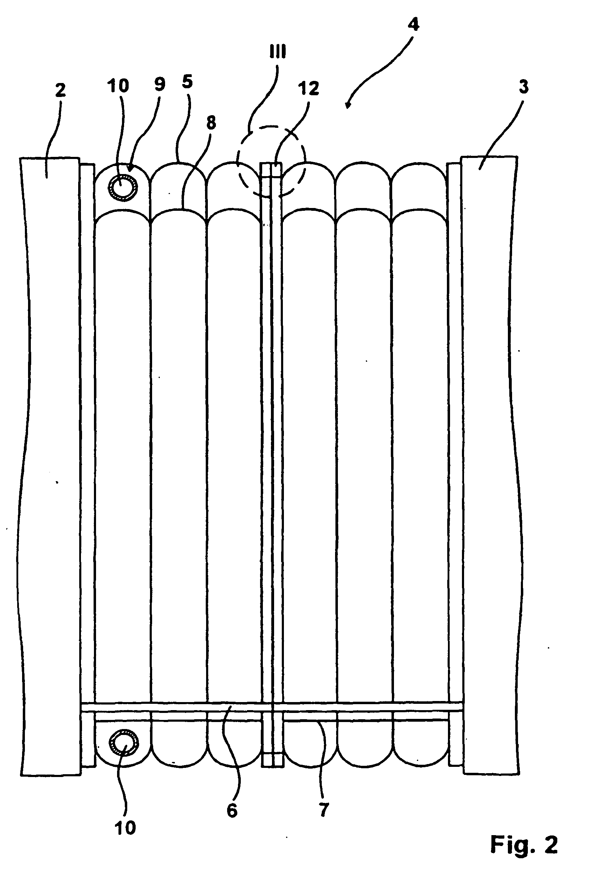

Das insgesamt mit 1 bezeichnete Gelenkfahrzeug gemäß Figur 2 umfasst die beiden Fahrzeugteile 2 und 3, zwischen denen der mit 4 bezeichnete Übergang angeordnet ist. Der mit 4 bezeichnete Übergang umfasst einen Wellenbalg 5, eine Übergangsbrücke 6 sowie ein Gelenk 7. Der Balg 5 weist im Bereich des Balgdaches eine Innenverkleidung in Form einer Balgdecke 8 auf, wobei zwischen dem Balgdach und der Balgdecke ein Hohlraum 9 vorgesehen ist, der der Aufnahme eines Löschmittelbehälters 10 dient. Ein solcher Löschmittelbehälter 10 kann beispielsweise auch unter dem Gelenk unter der Übergangsbrücke 6 angeordnet sein.

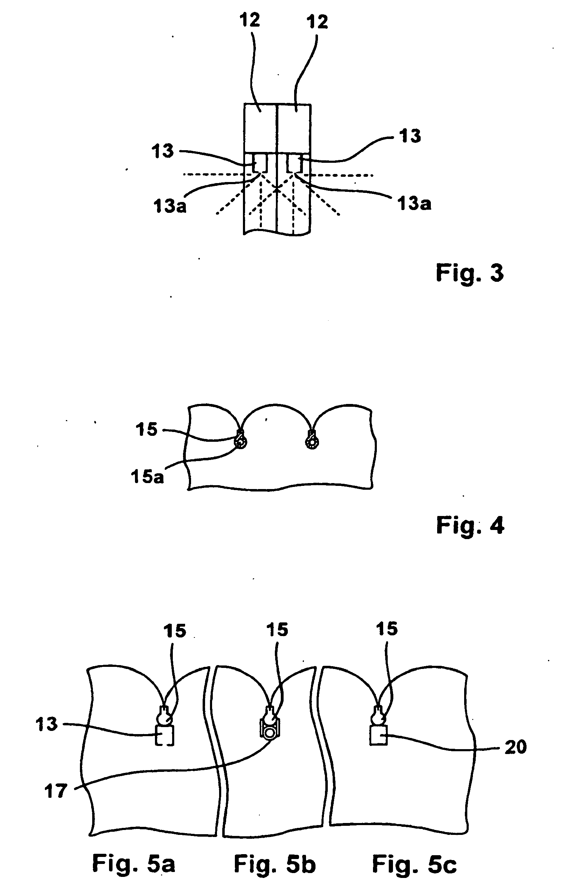

Figur 3 zeigt die beiden Kuppelrahmen im gekuppelten Zustand in schematischer Darstellung, wobei im Deckenbereich des Kuppelrahmens 12 die Düse 13 vorgesehen ist, die Öffnungen 13a aufweist, die zum Versprühen des Löschmittels dienen, das in dem Behälter 10 bevorratet ist. Die Öffnungen 13a sind derart in der Düse 13 verteilt, dass diese in alle Raumrichtungen den Flüssigkeitsnebel, beispielsweise aus Wasser, versprühen können. Zum Transport des Löschmittels von dem Behälter 10 zu der Düse 13 ist nach einer Variante gemäß Figur 4 vorgesehen, dass der mit 15 bezeichnete Balgrahmen, der die jeweiligen Enden der Wellen eines Wellenbalges erfasst, einen nach Art eines Kanals ausgebildeten Hohlraum 15 aufweist, der - wie bereits ausgeführt - dem Transport des Löschmittels von dem Behälter 10 zu der Düse 13 dienen kann. Denkbar ist nach einer Variante gemäß Figur 5a allerdings auch, dass die Düse 13 unmittelbar an dem Balgrahmen 15 befestigt ist. Weiterhin ist denkbar, an dem Balgrahmen 15 eine Leitung 17 anzuclipsen, die der Versorgung der Düse 13 mit Löschmittel aus dem Behälter 10 dient (Figur 5b). Der Sensor, durch den ein Feueralarm ausgelöst wird, und der in Figur 5c mit 20 bezeichnet ist, kann ebenfalls am Balgrahmen 15 befestigt sein.

Insgesamt sei an dieser Stelle darauf hingewiesen, dass es beliebig viele Möglichkeiten gibt, um den Behälter 10 im Bereich des Übergangs anzuordnen, wobei Prämisse lediglich ist, dass der Behälter aus optischen Gründen nicht unmittelbar sichtbar ist. Insofern erfolgt die Unterbringung des Behälters vorzugsweise in verdeckten Hohlräumen. Die Düsen 13 zum Versprühen des Löschmittels können - wie bereits ausgeführt - zum einen an dem Mittelrahmen 12 oder auch an dem Balgrahmen 15 bzw. auch der Innenverkleidung eines Balges angeordnet sein, wobei diese nicht dargestellt ist. Gleiches gilt für den Sensor 20. Der Verlauf der Versorgungsleitungen 15a, 17 ist abhängig davon, wo sich einerseits der Vorratsbehälter und andererseits die Düse 13 befindet.

## Patentansprüche

1. Übergang zwischen zwei gelenkig miteinander verbundenen Fahrzeugen, wobei der Übergang einen Übergangsbalg aufweist,
**dadurch gekennzeichnet,**
**dass** der Übergang (4) eine Feuerlöscheinrichtung (13, 20) aufweist.

2. Übergang nach Anspruch 1,
**dadurch gekennzeichnet,**
**dass** die Feuerlöscheinrichtung (13, 20) an der Innenseite des Übergangs (4) angeordnet ist.

3. Übergang nach Anspruch 1,
**dadurch gekennzeichnet,**
**dass** die Löscheinrichtung (13, 20) mindestens eine an der Innenseite des Übergangs angeordnete Düse (13) zur Verteilung eines Löschmittels aufweist.

4. Übergang nach Anspruch 1,
**dadurch gekennzeichnet,**
**dass** die Löscheinrichtung (13, 20) einen Sensor (20) zur Ermittlung eines Feuers umfasst.

5. Übergang nach Anspruch 1,
**dadurch gekennzeichnet,**
**dass** die Löscheinrichtung (13, 20) einen Behälter (10) zur Aufnahme des Löschmittels aufweist.

6. Übergang nach Anspruch 1,
**dadurch gekennzeichnet,**
**dass** der Behälter (10) im Übergang (4) oder im Bereich des Übergangs (4) angeordnet ist.

7. Übergang nach Anspruch 3 und 5,
**dadurch gekennzeichnet,**
**dass** zwischen Behälter (10) und der mindestens einen Düse (13) mindestens eine Leitung (15a, 17) vorgesehen ist, wobei der Balg (5) mindestens einen Rahmen (15) aufweist, wobei der Rahmen (15) zur Bildung der Leitung für das Löschmittel hohl (17) ausgebildet ist.

8. Übergang nach Anspruch 3 und 5,
**dadurch gekennzeichnet,**
**dass** die Leitung (17) für das Löschmittel am Balg (5), insbesondere an einem Rahmen (12, 15) des Balges (5), befestigt ist.

9. Übergang nach Anspruch 3,
**dadurch gekennzeichnet,**
**dass** die mindestens eine Düse (13) an einem Rahmen (12, 15) des Balges (5) befestigt ist.

10. Übergang nach Anspruch 3,
**dadurch gekennzeichnet,**
**dass** die mindestens eine Düse (13) an einer Innenverkleidung (8) des Balges (5) angeordnet ist.

11. Übergang nach Anspruch 4,
**dadurch gekennzeichnet,**
**dass** der Sensor (20) an einem Rahmen (12, 15) des Balges, an einer Innenverkleidung (8) des Balges oder an dem Druckbehälter (10) angeordnet ist.

12. Übergang nach Anspruch 3,
**dadurch gekennzeichnet,**
**dass** die Düse (13) Öffnungen (13a) zum Versprühen des Löschmittels sowohl in Richtung der Decke als auch in Richtung des Bodens aufweist.

## Claims

1. A connection between two hinge-linked vehicles, said connection comprising a connection bellows,
**characterized in**
**that** said connection (4) comprises a fire extinguishing device (13, 20).

2. The connection as set forth in claim 1,
**characterized in**
**that** the fire extinguishing device (13, 20) is disposed on the inner side of the connection (4).

3. The connection as set forth in claim 1,
**characterized in**
**that** the extinguishing device (13, 20) comprises at least one nozzle (13) for distributing an extinguishing agent, which is disposed on the inner side of the connection.

4. The connection as set forth in claim 1,
**characterized in**
**that** the extinguishing device (13, 20) incorporates a sensor (20) for detecting a fire.

5. The connection as set forth in claim 1,
**characterized in**
**that** the extinguishing device (13, 20) comprises a reservoir (10) for holding the extinguishing agent.

6. The connection as set forth in claim 1,
**characterized in**
**that** the reservoir (10) is disposed in the connection (4) or in the region of the connection (4).

7. The connection as set forth in claim 3 and 5,
**characterized in**
**that** at least one line (15a, 17) is provided between reservoir (10) and the at least one nozzle (13), the bellows (5) comprising at least one frame (15), said frame (15) being configured to be hollow (17) in order to form the line for the extinguishing agent.

8. The connection as set forth in claim 3 and 5,
**characterized in**
**that** the line (17) for the extinguishing agent is fastened to the bellows (5), in particular to a frame (12, 15) of the bellows (5).

9. The connection as set forth in claim 3,
**characterized in**
**that** the at least one nozzle (13) is fastened to a frame (12, 15) of the bellows (5).

10. The connection as set forth in claim 3,
**characterized in**
**that** the at least one nozzle (13) is disposed on an inner lining (8) of the bellows (5).

11. The connection as set forth in claim 4,
**characterized in**
**that** the sensor (20) is disposed on a frame (12, 15) of the bellows, on an inner lining (8) of the bellows or on the pressure reservoir (10).

12. The connection as set forth in claim 3,
**characterized in**
**that** the nozzle (13) comprises openings (13a) for spraying the extinguishing agent both in the direction of the ceiling and in the direction of the floor.

## Revendications

1. Intercirculation entre deux véhicules articulés, l'intercirculation comportant un soufflet d'intercirculation,
**caractérisé en ce**
**que** l'intercirculation (4) comporte un dispositif extincteur (13, 20).

2. Intercirculation selon la revendication 1,
**caractérisé en ce**
**que** le dispositif extincteur (13, 20) est disposé sur la face interne de l'intercirculation (4).

3. Intercirculation selon la revendication 1,
**caractérisé en ce**
**que** le dispositif extincteur (13, 20) comporte au moins un gicleur (13) qui est destiné à distribuer un agent extincteur et qui est disposé sur la face interne de l'intercirculation.

4. Intercirculation selon la revendication 1,
**caractérisé en ce**
**que** le dispositif extincteur (13, 20) comprend un capteur (20) destiné à détecter un incendie.

5. Intercirculation selon la revendication 1,
**caractérisé en ce**
**que** le dispositif extincteur (13, 20) comporte un récipient (10) destiné à recevoir l'agent extincteur.

6. Intercirculation selon la revendication 1,
**caractérisé en ce**
**que** le récipient (10) est disposé dans l'intercirculation (4) ou dans la région de l'intercirculation (4).

7. Intercirculation selon les revendications 3 et 5,
**caractérisé en ce**
**qu'**au moins une conduite (15a, 17) est prévue entre le récipient (10) et l'au moins un gicleur (13), le soufflet (5) comportant au moins un cadre (15), le cadre (15) (15) étant creux (17) pour former la conduite pour l'agent extincteur.

8. Intercirculation selon la revendication 3 et 5,
**caractérisé en ce**
**que** la conduite (17) pour l'agent extincteur est fixée au soufflet (5), notamment à un cadre (12, 15) du soufflet (5).

9. Intercirculation selon la revendication 3,
**caractérisé en ce**
**que** l'au moins un gicleur (13) est fixé sur un cadre (12, 15) du soufflet (5).

10. Intercirculation selon la revendication 3,
**caractérisé en ce**
**que** l'au moins un gicleur (13) est disposé sur un habillage intérieur (8) du soufflet (5).

11. Intercirculation selon la revendication 4,
**caractérisé en ce**
**que** le capteur (20) est disposé sur un cadre (12, 15) du soufflet, sur un habillage intérieur (8) du soufflet ou sur le récipient sous pression (10).

12. Intercirculation selon la revendication 3,
**caractérisé en ce**
**que** le gicleur (13) comporte des ouvertures (13a) destinées à atomiser l'agent extincteur tant en direction du plafond qu'en direction du sol.
